(19) Europäisches Patentamt
European Patent Office
Office européen des brevets

(11) Numéro de publication: **0 248 691**
**A1**

(12) # DEMANDE DE BREVET EUROPEEN

(21) Numéro de dépôt: 87401040.8

(22) Date de dépôt: 07.05.87

(51) Int. Cl.³: G 01 N 27/04
G 08 B 19/02

(30) Priorité: 07.05.86 FR 8606624

(43) Date de publication de la demande:
09.12.87 Bulletin 87/50

(84) Etats contractants désignés:
AT BE CH DE ES GB GR IT LI LU NL SE

(71) Demandeur: ETAT FRANCAIS représenté par Le Ministère de l'Urbanisme et du Logement LABORATOIRE CENTRAL DES PONTS ET CHAUSSEES
58 boulevard Lefebvre
F-75732 Paris Cedex 15(FR)

(72) Inventeur: Pilloy, Alain
16, rue des Tamaris
F-54270 Essey les Nancy(FR)

(72) Inventeur: Livet, Jean
34, rue d'Amance
F-54280 Champenoux(FR)

(72) Inventeur: Deschassot, Bernard
4, place E. Renau
F-54510 Tomblaine(FR)

(74) Mandataire: Joly, Jean-Jacques et al,
CABINET BEAU DE LOMENIE 55, rue d'Amsterdam
F-75008 Paris(FR)

(54) **Capteur de surface d'une voie ou chaussée et application à la détermination de l'état et de la température de congélation d'une phase aqueuse située sur la surface.**

(57) Le capteur comprend deux électrodes (14,16) logées dans un corps métallique (12) dans la partie superficielle d'un corps de chaussée, et un thermoélément à effet Peltier (18) associé à l'une des électrodes pour permettre l'établissement d'un état thermique différentiel entre les électrodes. Les électrodes et le corps métallique sont reliées à un circuit de mesure pour élaborer : un premier signal représentant la résistance entre électrodes et corps métallique afin de déterminer un état de surface sec ou humide / verglacé ; ou un deuxième signal différentiel représentant la différence entre les résistances existant entre chacune des électrodes et le corps métallique afin de déterminer la température de congélation d'une phase aqueuse située sur la chaussée par réfrigération différentielle du capteur et détection d'un changement de pente de la courbe de variation du signal différentiel. Le capteur est utilisable dans un système de détection prévisionnelle du verglas.

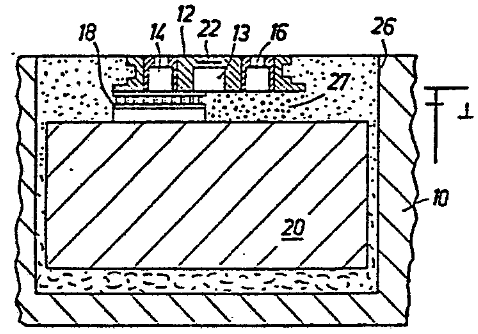


Fig. 1

EP 0 248 691 A1

Croydon Printing Company Ltd.

0248691

**Capteur de surface d'une voie ou chaussée et application à la détermination de l'état de surface et de la température de congélation d'une phase aqueuse située sur la surface**

La présente invention est relative à un capteur de surface d'une voie ou chaussée, et à l'utilisation d'un tel capteur pour déterminer l'état de la surface de la voie ou chaussée et la température de congélation d'une phase aqueuse située sur cette surface.

Le domaine d'application de l'invention est notamment la détection prévisionnelle du verglas sur les chaussées routières ou autres voies de circulation (par exemple, pistes d'aéroport).

Pour une telle application, il a été proposé d'utiliser des capteurs implantés en surface du corps de chaussée, avec des électrodes affleurant à la surface de la chaussée. On pourra par exemple se référer à la demande de brevet français No 2 389 952. Dans ce système connu, un bloc de mesure est mis en place en surface de la chaussée avec plusieurs capteurs et des dispositifs de chauffage et de refroidissement associés à des capteurs respectifs. L'état de surface de la chaussée est déterminé par surveillance de la résistance entre électrodes de chaque capteur, avec un réchauffage ou un refroidissement sélectif des capteurs. Un risque de verglas est signalé lorsqu'est détecté un état verglacé à la surface d'un capteur porté à une température inférieure à celle de la surface de la chaussée.

La présente invention a pour premier objet de fournir un capteur de surface de chaussée ayant une structure plus simple que celle du bloc de mesure évoqué ci-avant.

L'invention a aussi pour objet de fournir un procédé d'exploitation du capteur de surface permettant non pas seulement d'anticiper un phénomène (formation de verglas) susceptible de se produire, mais de fournir des informations précises au gestionnaire routier, à savoir :

- d'une part, l'indication de l'état sec ou humide / verglacé de la surface de la voie ou de la chaussée surveillée,
- d'autre part, la température de congélation d'une phase aqueuse située à la surface de la chaussée, cette température de congélation, qui varie en fonction de la concentration en fondants chimiques éventuellement déjà répandus sur la chaussée, étant une information particulièrement utile à la détection prévisionnelle du verglas combinées à d'autres informations, soit résultant de mesures (température et hygrométrie de l'air, température de surface de la chaussée, intensité de précipitations atmosphériques), soit provenant de prévisions météorologiques.

Aussi, selon un de ses aspects, la présente invention concerne un capteur du type comprenant un corps métallique destiné à être mis en place dans la partie superficielle d'un corps de chaussée, deux électrodes logées dans le corps métallique et affleurant à la surface supérieure de celui-ci, des moyens de chauffage et de réfrigération, et un dispositif de mesure relié aux électrodes, capteur dans lequel, conformément à l'invention, les moyens de chauffage et de réfrigération sont associés à l'une, ou première, des deux électrodes pour permettre l'établissement d'un état thermique différentiel entre les électrodes, et le dispositif de mesure comprend un circuit relié électriquement aux électrodes et au corps métallique pour élaborer sélectivement un premier signal représentatif de la résistance entre au moins une des deux électrodes et le corps métallique, ou un deuxième signal consistant en un signal différentiel représentatif de la différence entre les résistances existant entre chacune des électrodes et le corps métallique.

Un tel capteur présente bien une structure simplifiée par rapport au bloc de mesure du document FR-A-2 389 952.

De plus, muni d'une sonde de température, ce capteur s'avère particulièrement adapté à la détermination de la température de congélation d'une phase aqueuse située sur la chaussée. C'est ainsi que, selon un autre aspect de l'invention, cette détermination est effectuée en mettant en oeuvre un procédé comprenant :

- la comparaison du premier signal fourni par le capteur avec une valeur de seuil, pour détecter un état de surface, sec ou humide / verglacé,

- la commande des moyens de chauffage et de réfrigération pour refroidir la partie du capteur dans laquelle se trouve la première électrode lorsque ledit état de surface humide est détecté,

- pendant la réfrigération, l'enregistrement de couples de données comprenant chacun une première donnée représentant l'amplitude du signal différentiel fourni par le capteur et une deuxième donnée représentant la température à la surface du capteur au même instant, et

- la détection d'un changement de pente de la courbe représentant la variation de l'amplitude du signal différentiel en fonction du temps, pour détecter un changement d'état d'une phase aqueuse située sur le capteur, du côté de la première électrode.

La température de surface du capteur mesurée à l'instant du changement de pente ou à un instant proche de celui-ci peut fournir une première valeur de la température de congélation recherchée.

Les couples de données enregistrées avant et après l'instant du changement de pente peuvent être utilisés pour élaborer deux droites représentant la variation du signal différentiel fourni par le capteur en fonction de la température de surface de celui-ci. Le point d'intersection entre ces deux droites peut fournir une deuxième valeur de température de congélation recherchée. Cette deuxième valeur est alors retenue si elle confirme la première valeur obtenue.

D'autres particularités et avantages du capteur conforme à l'invention et du procédé de détermination de température de congélation utilisant un tel capteur ressortiront à la lecture de la description faite, ci-après, à titre indicatif mais non limitatif, en référence aux dessins annexés sur lesquels :

- les figures 1 à 3 sont des vues montrant un mode de réalisation d'un capteur selon l'invention respectivement de face et en coupe, de côté et de dessus ;

- la figure 4 est un schéma d'un circuit de mesure associé au capteur des figures 1 à 3 ;

- la figure 5 est un organigramme montrant le déroulement du processus de recherche d'état de surface ; et

- la figure 6 est un organigramme montrant le déroulement des stades du processus de recherche de la température de congélation d'une solution aqueuse située sur une chaussée, au moyen du capteur et du circuit de mesure des figures 1 à 4.

Sur les figures 1 et 2, la référence 10 désigne un corps de chaussée routière dans lequel est implanté un capteur conforme à l'invention.

Le capteur comporte un corps métallique, ou massif 12, par exemple en laiton, de forme générale parallélépipédique. La surface supérieure du corps 12 est dégagée et affleure à la surface de la chaussée. Deux électrodes métalliques 14, 16 sont scellées dans des logements formés dans le corps métallique 12. Les électrodes sont espacées l'une de l'autre et ont chacune une face supérieure qui affleure à la surface libre du capteur. Les électrodes 14, 16 sont par exemple dans le même matériau que le corps 12 et sont isolées de celui-ci. Comme le montre la figure 3, la surface libre du capteur est rainurée de façon à assurer un mouillage homogène, semblable à celui de la surface de la chaussée.

Un dispositif de chauffage ou de réfrigération tel qu'un thermoélément à effet Peltier 18 est disposé sous le corps 12, et plus exactement sous la partie du corps 12 dans laquelle est logée l'électrode 14. Le thermoélément 18 permet ainsi d'effectuer un chauffage ou une réfrigération différentiels du capteur. Un évidement 13 est formé entre les deux parties du capteur où sont logées les électrodes afin de faciliter le maintien d'un gradient de température entre ces deux parties lorsque le thermoélément est activé. La dissipation de l'énergie recueillie par le thermoélément 18 fonctionnant en mode réfrigération du capteur est assurée au moyen d'un radiateur 20 fixé à la face inférieure du thermoélément et présentant des ailettes 21 qui s'étendent vers le bas en direction de l'intérieur du corps de chaussée.

Une sonde de température 22, par exemple une sonde à résistance de platine, est logée dans le corps 12 au voisinage de la surface de celui-ci, sensiblement à égale distance entre les électrodes 14 et 16.

Les différents éléments du capteur sont assemblés et noyés dans un bloc cylindrique 26 en résine scellé dans un logement pratiqué par carottage dans le revêtement routier. Dans sa partie inférieure contenant le radiateur 20, le bloc 26 est formé par une résine chargée de particules en matériau conducteur thermique, par exemple une poudre métallique, afin de faciliter le transfert de chaleur vers le corps de chaussée. Par contre, dans la partie 27 située entre l'électrode 16 et le radiateur 20, la résine du bloc 26 est chargée de poudre isolante afin d'isoler thermiquement l'électrode 16 du radiateur 20.

Des conducteurs électriques reliés aux électrodes 14, 16, au corps 12, au thermoélément 18 et à la sonde 22 (figure 3) sortent du bloc 26 et sont noyés dans le corps de chaussée pour connecter le capteur à un circuit de mesure. Ce dernier est par exemple une partie d'une unité de traitement implantée en bordure de la chaussée.

La figure 4 illustre un mode de réalisation du circuit de mesure 30.

Le circuit 30 comprend un oscillateur 32 qui délivre une tension alternative sinusoïdale, par exemple d'une fréquence de 1 kHz, qui est transmise au capteur par l'intermédiaire d'un circuit 33 de commutation d'électrodes. Ce dernier est également interposé entre le capteur et une chaîne de détection comprenant, en entrée, deux amplificateurs opérationnels 34,36. Les liaisons entre, d'une part, les entrées positives et négatives des amplificateurs 34,36 et, d'autre part, les électrodes 14,16 et le corps 12 sont fonction de la configuration du circuit 33. Les sorties des amplificateurs 34,36 sont couplées par des condensateurs respectifs à un point de sommation S. La tension V au point S est amplifiée au moyen d'un amplficateur 38 dont le signal de sortie est redressé au moyen d'un circuit redresseur 42. Le signal de sortie du redresseur 42 est transmis à une unité de traitement 50 à microprocesseur pour y être traité, après échantillonnage et conversion sous forme numérique.

Une tension de décalage Ud fournie par le circuit 50 peut être superposée au signal fourni par l'amplificateur 38 afin d'augmenter la dynamique du signal de sortie du redresseur 42.

Le circuit de mesure 30 comprend encore un circuit d'alimentation 46 fournissant une tension continue et un inverseur 44 interposé entre le circuit 46 et le thermoélément à effet Peltier 18 pour faire fonctionner celui-ci en mode de chauffage ou en mode réfrigération selon la polarité et le niveau de la tension appliquée à ses bornes. Le fonctionnement du circuit d'alimentation 46 est commandé par l'unité de traitement 50 uniquement pendant les phases de chauffage ou réfrigération, l'unité de traitement commandant également l'inverseur 44 en fonction du mode de fonctionnement choisi (chauffage ou réfrigération).

Le circuit de mesure 30 comprend enfin un circuit 48 qui est relié à la sonde 22 et qui élabore un signal Uts transmis à l'unité de traitement 50 et représentatif de la température de surface du capteur.

Selon l'application envisagée, des informations supplémentaires peuvent être nécessaires aux traitements à réaliser par l'unité 50. C'est ainsi que sont notamment prévus :

- un capteur de température 52 fournissant à l'unité de traitement 50 un signal Uta représentatif de la température de l'air ambiant,
- un capteur de température 53 fournissant à l'unité de traitement 50 un signal Uts∞ représentatif de la température de surface de la chaussée prise à une distance suffisante du capteur pour ne pas être perturbée par les changements de température imposés à celui-ci (chauffage ou réfrigération par le thermoélément), et
- un capteur d'hygrométrie 55 (par exemple cellule capacitive) fournissant à l'unité de traitement 50 un signal Uhr représentatif de l'hygrométrie de l'air ambiant,
- un capteur de précipitations 54 fournissant à l'unité de traitement 50 un signal Upa représentatif de l'intensité de précipitations atmosphériques reçues par la chaussée.

Un mode de réalisation du capteur 54 est décrit dans la demande de brevet français déposée le même jour que la présente demande et par le même Demandeur sous le titre "Détecteur de précipitations atmosphériques". Ce détecteur est essentiellement constitué par un entonnoir muni d'un circuit de chauffage et au fond duquel est disposé un ajutage qui laisse passer les précipitations recueillies sous forme de gouttes dont la fréquence est mesurée au moyen d'une barrière optique prévue au niveau de l'ajutage.

Le circuit décrit ci-dessus permet l'exploitation du capteur pour la recherche de l'état de surface de la chaussée ou pour la détermination du point de congélation d'une phase aqueuse présente sur la surface de la chaussée. Les processus de recherche d'état de surface ou de point de congélation sont réalisés au moyen de programmes mis en oeuvre par l'unité de traitement 50.

Pour la détermination de l'état de surface de la chaussée, le circuit commutateur d'électrodes 33 est configuré dans l'état représenté par la figure 4 sous la commande de l'unité de traitement 50. La tension de sortie de l'oscillateur 32 est appliquée aux bornes d'un circuit série formé par une résistance fixe R1 et par la résistance entre les électrodes 14,16 reliées en commun et le corps métallique 12. L'amplificateur 34 a son entrée positive reliée au point commun entre le corps 12 et la résistance fixe R1 et son entrée négative reliée à la masse électrique du circuit de mesure, tandis que l'amplificateur 36 a ses entrées positive et négative reliées à l'oscillateur 32. La tension V au point S est alors inversement proportionnelle à la résistance entre le corps 12 et les électrodes 14,16. Après amplification et redressement, le signal Ur reçu par l'unité de traitement est donc représentatif de la résistivité r12m entre le corps et les électrodes reliées en commun.

Le processus de recherche de l'état de surface à partir des signaux reçus par l'unité de traitement est illustré par l'organigramme de la figure 5.

Après configuration du commutateur d'électrodes, le démarrage de l'oscillateur 32 est commandé par l'unité de traitement (on notera que l'oscillateur 32 fonctionne uniquement pendant les phases de mesure).

Le signal Ur reçu par l'unité de traitement et représentatif de la résistance (ou de la résistivité de surface) entre le corps 12 et les électrodes 14,16 est comparé à une valeur de seuil S1 afin de discerner deux états :

- un état humide ou verglacé qui se traduit par un signal de résistivité Ur relativement fort (Ur supérieur au seuil S1),
- un état sec qui se traduit par un signal de résistivité Ur relativement faible (Ur non supérieur au seuil S1).

Lorsque l'état de surface a été détecté, l'arrêt de l'oscillateur est commandé.

Dans l'exemple décrit ci-avant, les électrodes 14, 16 sont reliées en commun lorsque le circuit de commutation 33 est configuré pour la recherche d'état de surface. Le signal Ur est donc représentatif de la résistance obtenue par la mise en parallèle des résistances entre chaque électrode 14,16 et le corps métallique 12. En variante, il pourra suffire d'élaborer un signal représentatif de la résistance entre une seule des électrodes et le corps métallique, l'électrode choisie étant de préférence celle 14 associée au thermoélément. Dans ce cas, la liaison entre les électrodes réalisée par le circuit de commutation tel qu'illustré par la figure 4 est supprimée, l'électrode non utilisée restant "en l'air".

Pour la détermination de la température de congélation d'une phase aqueuse présente sur la chaussée, le commutateur d'électrodes 33 est configuré sous la commande de l'unité de traitement afin de permettre une mesure différentielle. Cette configuration est obtenue en inversant les positions des commutateurs du circuit 33 de la figure 4.

La tension alternative sinusoïdales produite par l'oscillateur 32 est alors appliquée entre les électrodes 14 et 16 du capteur, l'électrode 16 étant portée au potentiel de la masse électrique du circuit de mesure. A l'entrée de la chaîne de mesure, l'amplificateur opérationnel 34 a ses entrées positive et négative reliées respectivement au corps 12 et à l'électrode 16 (masse), tandis que l'amplificateur opérationnel 36 a ses entrées positive et négative reliées respectivement à l'électrode 16 (masse) et à l'électrode 14. En conférant à l'amplificateur 34 un gain double de celui de l'amplificateur 36, on dispose donc au point S d'une tension V proportionnelle à (em -e1) - (e2 -em), e1, e2 et em représentant les potentiels respectifs des électrodes 14, 16 et du corps 12. Ainsi, la tension V est représentative de la différence entre les tensions qui règnent, d'une part, entre le corps 12 et la première électrode 14 et, d'autre part entre la deuxième électrode 16 et le corps 12.

En d'autres termes, on dispose au point S d'un signal différentiel V représentatif de la différence entre la résistance (ou résistivité de surface) r1m entre le corps 12 et l'électrode 14 et la résistance (ou résistivité de surface) r2m entre le corps 12 et l'électrode 16.

Après amplification et redresement, on dispose d'un signal de résistance différentielle Urd qui est transmis à l'unité de traitement 50.

La tension de décalage peut être superposée au signal fourni par l'amplificateur 38 afin d'augmenter la dynamique du signal de sortie du redresseur 42.

Le processus de recherche de point de congélation à partir des signaux reçus par l'unité de traitement 50 est illustré par l'organigramme de la figure 6.

Ce processus est engagé lorsque l'état de surface du capteur est considéré comme humide, que la température de l'air ambiant ta ou la température de surface de la chaussée ts∞ sont inférieures à un seuil prédéterminé t (par exemple signaux Uta ou Uts∞ inférieurs à un seuil Ut correspondant à +4°C) et, éventuellement, qu'il n'y a pas de fortes précipitations (signal Upa inférieur à un seuil de précipitation Up). Des cycles successifs de détermination du point de congélation sont alors réalisés. La fréquence de ces cycles peut être variable selon les conditions, la recherche du point de congélation étant réalisée plus fréquemment lorsque l'une au moins des températures ta et ts$\infty$ devient inférieure à un nouveau seuil prédéterminé proche de 0°C (par exemple +1°C).

Lorsque les conditions ci-dessus indiquées sont remplies, le processus de recherche du point de congélation est déclenché en commandant d'abord le fonctionnement du thermoélément à effet Peltier en mode chauffage de façon à amener la température de surface du capteur à une valeur positive prédéterminée (par exemple +4°C) nécessaire à la fusion du verglas ou de la neige pouvant éventuellement se trouver sur le capteur.

Le circuit commutateur d'électrode 33 est configuré en mode mesure différentielle et le fonctionnement de l'oscillateur 32 est commandé. Le signal Urd obtenu est d'abord comparé à une valeur de seuil S3 afin de commander la superposition de la tension de décalage Ud si le signal Urd dépasse cette valeur de seuil (la tension de décalage Ud vient alors en diminution du signal V redressé). Pour la suite des mesures, l'inverseur 44 est commandé en mode réfrigération et le fonctionnement du circuit d'alimentation 46 est commandé pour alimenter le thermoélément 18.

Pendant la réfrigération, les amplitudes des signaux Urd et Uts sont examinées pour mémoriser péiodiquement des couples informations (RDi, TSi) qui représentent les valeurs de la résistivité différentielle et de la température de surface du capteur mesurées à un même instant.

Une première analyse est effectuée en temps réel sur les valeurs de résistivité différentielle et porte sur trois séries glissantes de valeurs consécutives : RDj à RD(j+n), RD(j+1+n) à RD(j+1+2n) et RD(j+2+2n) à RD(j+2+3n), n étant un nombre entier (par exemple égal à 8). Des valeurs représentatives des valeurs moyennes de résistivité différentielle dans chaque série sont calculées :

$$RDm1 = RDj + \dots + RD(j+n)$$

$$RDm2 = RD(j+1+n) + \dots + RD(j+1+2n)$$

RDm3 + RD(j+2+2n) + ... + RD(j+2+3n)
Et les valeurs moyennes sont utilisées pour calculer les pentes des droites joignant les points moyens de chaque série dans la courbe représentant l'évolution de la résistivité différentielle en fonction du temps. Les valeurs RDi sont prélevées à des intervalles réguliers fonction de la température et, les pentes recherchées sont proportionnelles à :

pm1 = RDm2 - RDm1 et

pm2 = RDm3 - RDm2

L'acccroissement de pente pm2 -pm1 est comparé à une valeur de seuil prédéterminée p. Lorsque la réfrigération de la partie du capteur contenant l'électrode 14 provoque la congélation de la phase aqueuse sur cette électrode, une variation importante et rapide de la résistivité différentielle est observée puisque la phase aqueuse est encore liquide sur l'autre électrode.

Un accroissement de pente pm2 - pm1 supérieur ou égal à p indique un changement probable d'état. Ce fait est confirmé en poursuivant l'acquisition d'un certain nombre N de valeurs de la résistivité différentielle et en vérifiant que celle-ci continue à varier de façon monotone.

Si cette vérification est positive, on retient comme température de congélation Tcg1, la valeur TS(j+k) qui correspond à une valeur de résistivité RD(j+k) ayant un rang k prédéterminé dans les trois séries de valeurs considérées. La valeur de k est déterminée expérimentalement. Lorsque n est égal à 8, on pourra prendre k = 13.

Si, par contre, la résistivité différentielle ne continue pas à varier de façon monotone, la variation de pente est imputable à une perturbation de signal induite par le trafic routier (projections sur le capteur), et le processus d'analyse de pente est poursuivi.

Si l'accroissement de pente pm2 -pm1 est inférieur à p, et si, d'une part, la durée du cycle de réfrigération en cours n'a pas atteint une durée maximale prédéterminée (par exemple trois minutes) et, d'autre part, la température de surface du capteur n'a pas atteint une valeur minimale prédéterminée (par exemple -20° C), un nouveau couple de valeurs (RDi, TSi) est acquis, et l'analyse de pente est à nouveau effectuée en remplaçant les trois séries de valeurs

RDj à RD(j+n), RD(j+1+n) à RD(j+1+2n) et RD(j+2+2n) à RD(j+2+3n) par RD(j+1) à RD(j+1+n), RD(j+2+n) à RD(j+2+2n) et RD(j+3+2n) à RD(j+3+3n).

Avantageusement, lorsque la première analyse effectuée comme indiqué ci-dessus a donné une valeur Tcg1 de la température de congélation, on arrête le fonctionnement de l'oscillateur 32 et on procède à une seconde analyse de confirmation qui est effectuée comme suit, tout en réchauffant le capteur pour le ramener à la température de surface de la chaussée ts∞.

Un premier ensemble de couples de valeurs mémorisées (RDi, TSi) situées d'un côté de la température TS(j+k) correspondant à Tcg1 est utilisé pour calculer les paramètres a1 et b1 caractérisant la relation linéaire entre la résistance différentielle RD et la température de surface TS avant changement d'état, c'est-à-dire :

RD = a1.TS + b1

Un deuxième ensemble de couples de valeurs mémorisées (RDi, TSi) situées de l'autre côté de la température TS(j+k) est utilisé pour calculer les paramètres a2 et b2 caractérisant la relation linéaire entre la résistance différentielle RD et la température de surface TS après changement d'état, c'est-à-dire RD = a2.TS + b2

On utilisera des suites de couples de valeurs mémorisées situées de part et d'autre de TS (j+k) et de préférence non adjacents à cette valeur. Par exemple, avec k = 13, on pourra prendre les couples RD(j-4), TS(j-4) à RD(j+8), TS(j+8) pour déterminer a1 et b1 et les couples RD(j+16), TS(j+16) à RD(j+28), TS (j+28) pour déterminer a2 et b2.

Lorsque les paramètres a1, b1, a2, b2 sont déterminés, on obtient comme valeur de congélation Tcg2 celle correspondant à l'intersection des droites RD = a1.TS + b1 et RD = a2.TS + b2, à

savoir : Tcg2 = (b2-b1) / (a1-a2).

Si l'écart entre Tcg2 et Tcg1 est inférieur à un seuil minimum prédéterminé dT (par exemple égal à 0,5° C), la valeur de Tcg2 est validée comme étant la température de congélation recherchée.

Cette température est transmise à un centre de gestion routière où, combinée avec d'autres informations, par exemple évolution de la température et de l'hygrométrie ambiante, température de surface de chaussée, précipitations, état de surface, prévisions météorologiques, ..., elle autorise une prévision de la formation de verglas et, par là-même, permet de prendre les mesures de protection nécessaires.

## REVENDICATIONS

1. Capteur de surface d'une voie ou chaussée, comprenant un corps métallique (12) destiné à être mis en place dans la partie superficielle d'un corps de chaussée (10), deux électrodes (14, 16) logées dans le corps métallique et affleurant à la surface supérieure de celui-ci, des moyens (18) de chauffage et de réfrigération, et un dispositif de mesure (30, 50) relié aux électrodes,

caractérisé en ce que les moyens (18) de chauffage et de réfrigération sont associés à une première électrode (14) pour permettre l'établissement d'un état thermique différentiel entre les électrodes (14, 16), et le dispositif de mesure comprend un circuit (30) relié électriquement aux électrodes et au corps métallique (12) pour élaborer sélectivement un premier signal (Ur) représentatif de la résistance entre les deux électrodes (14,16) et le corps métallique (12), ou un deuxième signal consistant en un signal différentiel (Urd) représentatif de la différence entre les résistances existant entre chacune des électrodes (14, 16) et le corps métallique (12).

2. Capteur selon la revendication 1, caractérisé en ce qu'il comprend une sonde de température (22) reliée audit circuit (30) du dispositif de mesure.

3. Capteur selon l'une quelconque des revendications 1 et 2, caractérisé en ce que les moyens de chauffage et de réfrigération comprennent un thermoélément (18) à effet Peltier, un circuit (46) fournissant une tension d'alimentation continue, et un inverseur (44) interposé entre le circuit d'alimentation (46) et le thermoélément (18) pour faire fonctionner celui-ci en mode chauffage ou en mode réfrigération selon la polarité de la tension appliquée à ses bornes.

4. Capteur selon l'une quelconque des revendications 1 à 3, caractérisé en ce que le dispositif de mesure comprend un oscillateur (32) pour fournir une tension alternative, une chaîne de détection (34,36,38,42) pour fournir ledit premier ou ledit deuxième signal, et un circuit de commutation (33) reliant les électrodes (14,16) et le corps métallique (12) du capteur, d'une part, à l'oscillateur et, d'autre part, à la chaîne de détection, le circuit de commutation ayant :

- un premier état dans lequel la tension fournie par l'oscillateur est appliquée aux bornes d'un circuit série formé par une résistance fixe (R1) et la résistance entre au moins l'une des électrodes (14,16) et le corps métallique, et la chaîne de détection est connectée à cette électrode et au corps métallique pour fournir un signal représentatif de la différence de tension entre l'électrode et le corps métallique ; et
- un deuxième état dans lequel la tension fournie par l'oscillateur est appliquée entre les électrodes (14,16) du capteur, et la chaîne de détection est connectée à chaque électrode et au corps métallique pour produire un signal représentatif de la différence entre les tensions existant entre chaque électrode et le corps métallique.

5. Procédé de détermination de l'état de surface d'une voie ou chaussée utilisant un capteur de surface selon l'une quelconque des revendications 1 à 4, caractérisé en ce qu'il comprend :

- la comparaison dudit premier signal avec une valeur de seuil pour détecter un état de surface humide ou verglacé lorsque la valeur relative du premier signal par rapport à la valeur de seuil indique que la résistance entre au moins une des deux électrodes et le corps métallique est relativement faible, ou un état sec, dans le cas contraire.

6. Procédé de détermination de la température de congélation d'une phase aqueuse située sur une voie ou chaussée utilisant un capteur de surface selon l'une quelconque des revendications 1 à 3, procédé caractérisé en ce qu'il comprend :

- la commande des moyens de chauffage et de réfrigération pour refroidir la partie du capteur dans laquelle se trouve la première électrode lorsqu'un état de surface humide est détecté,
- pendant la réfrigération, l'enregistrement de couples de données comprenant chacun une première donnée représentant l'amplitude du signal différentiel fourni par le capteur et une deuxième donnée représentant la température à la surface du capteur au même instant, et

- la détection d'un changement de pente de la courbe représentant la variation de l'amplitude du signal différentiel en fonction du temps, pout détecter un changement d'état d'une phase aqueuse située sur le capteur du côté de la première électrode.

7. Procédé selon la revendication 6, caractérisé en ce que l'on produit une première valeur de température de congélation égale à la température de surface du capteur mesurée à l'instant du changement de pente ou à un instant proche de celui-ci.

8. Procédé selon la revendication 7, caractérisé en ce que l'on utilise des couples de données enregistrés avant et après la détection dudit changement d'état pour fournir une deuxième valeur de température de congélation correspondant au point d'intersection entre deux droites représentant les variations dudit signal différentiel en fonction de la température de surface du capteur avant et après ledit changement d'état détecté.

9. Procédé selon la revendication 8, caractérisé en ce que l'on vérifie que l'écart entre la première et la deuxième valeur de température de congélation obtenues est inférieur à une limite supérieure prédéterminée.

10. Procédé selon l'une quelconque des revendications 6 à 9, caractérisé en ce que, après détection dudit changement de pente, on examine l'allure de la variation dudit signal différentiel pour confirmer que le changement de pente détecté est imputable à un changement d'état.

11. Procédé selon l'une quelconque des revendications 6 à 10, caractérisé en ce que, après détermination de la température de congélation, on effectue un réchauffage du capteur jusqu'à la température de surface de la voie ou chaussée.

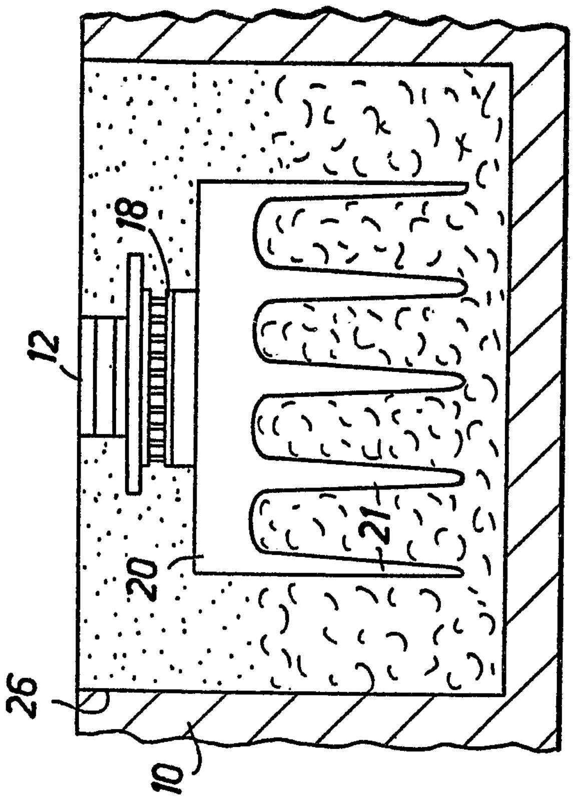


Fig-2

Fig-1

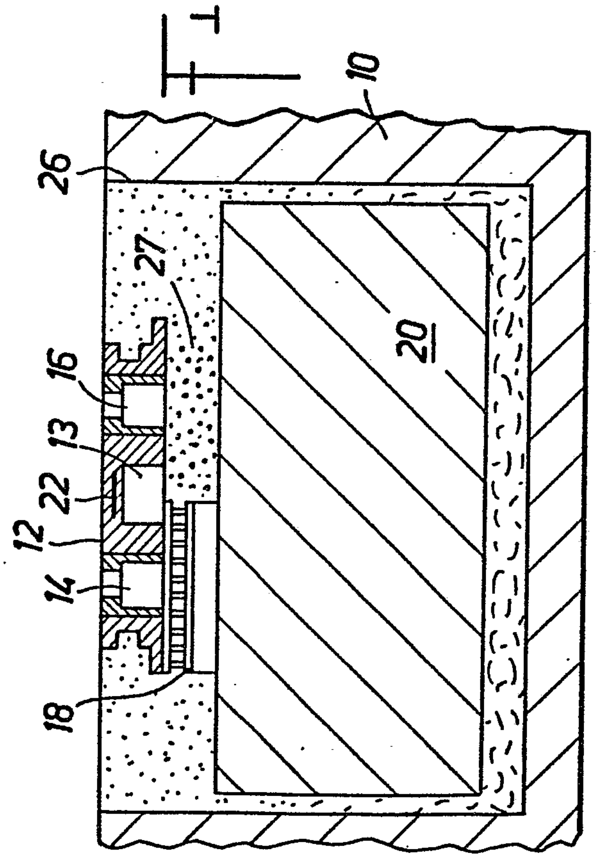


Fig-3

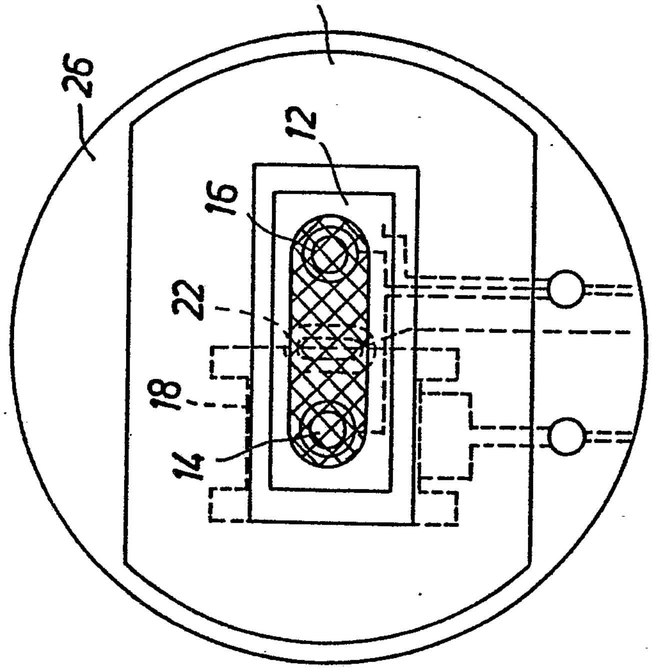

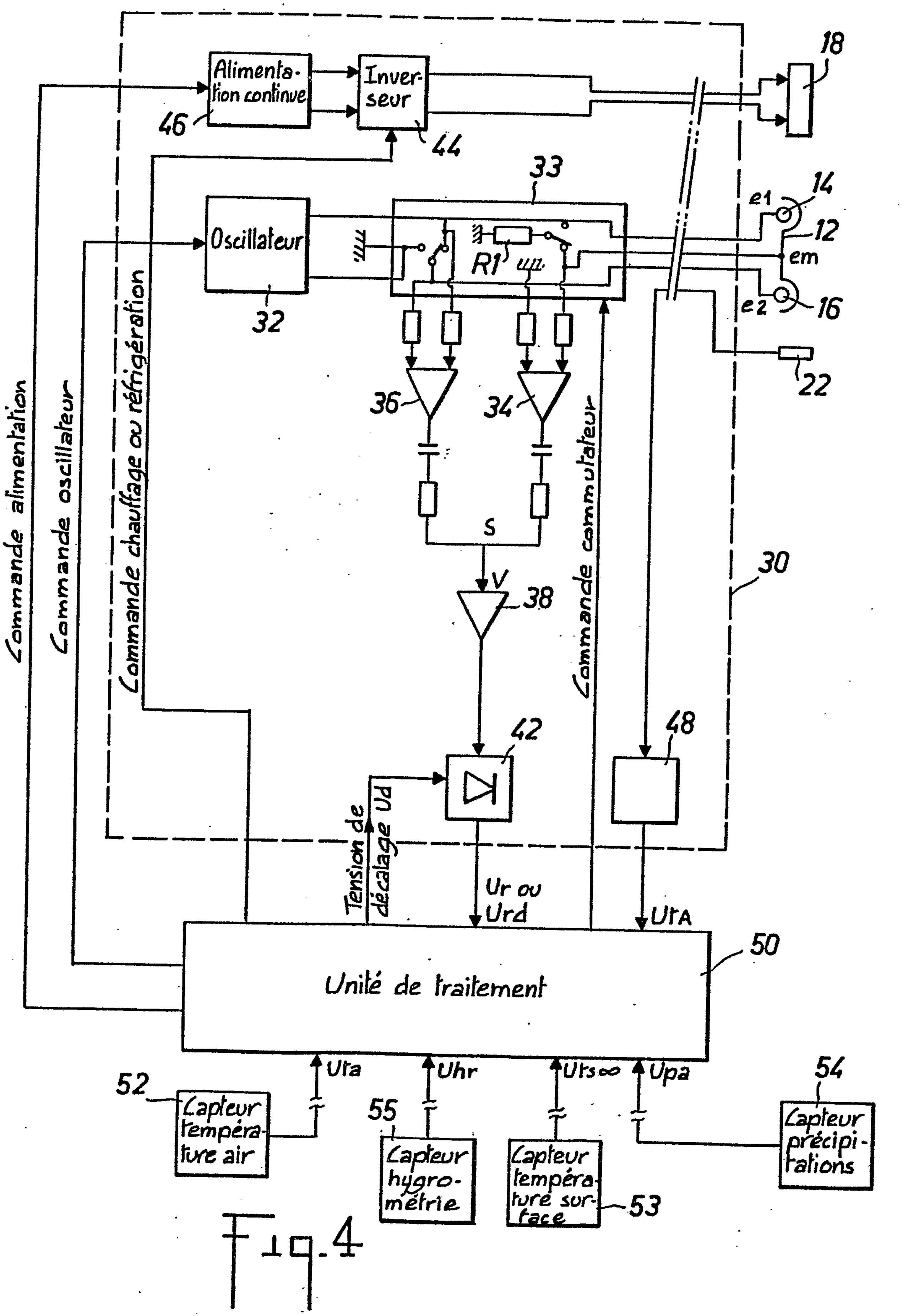

18
Alimentation continue
46
Inverseur
44
33
Oscillateur
32
R1
e1
14
12
em
e2
16
22
36
34
S
V
38
30
Commande alimentation
Commande oscillateur
Commande chauffage ou réfrigération
Commande commutateur
42
48
Tension de décalage Ud
Ur ou Urd
UrA
Unité de traitement
50
Ura
Uhr
Urs∞
Upa
52
Capteur température air
55
Capteur hygrométrie
Capteur température surface
53
54
Capteur précipitations


Fig. 4

Recherche de l'etat de surface

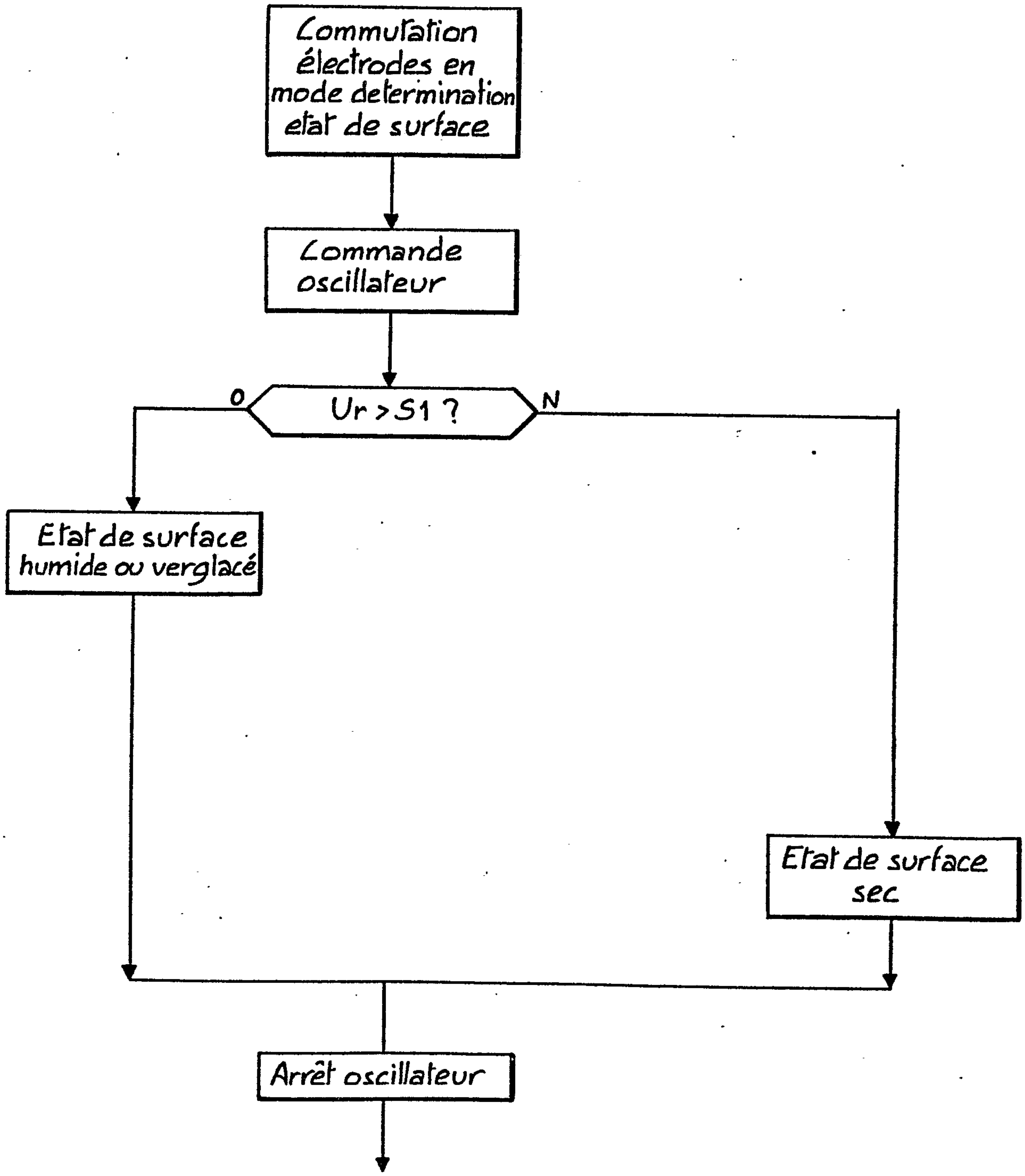


Fig.5

Fig.6

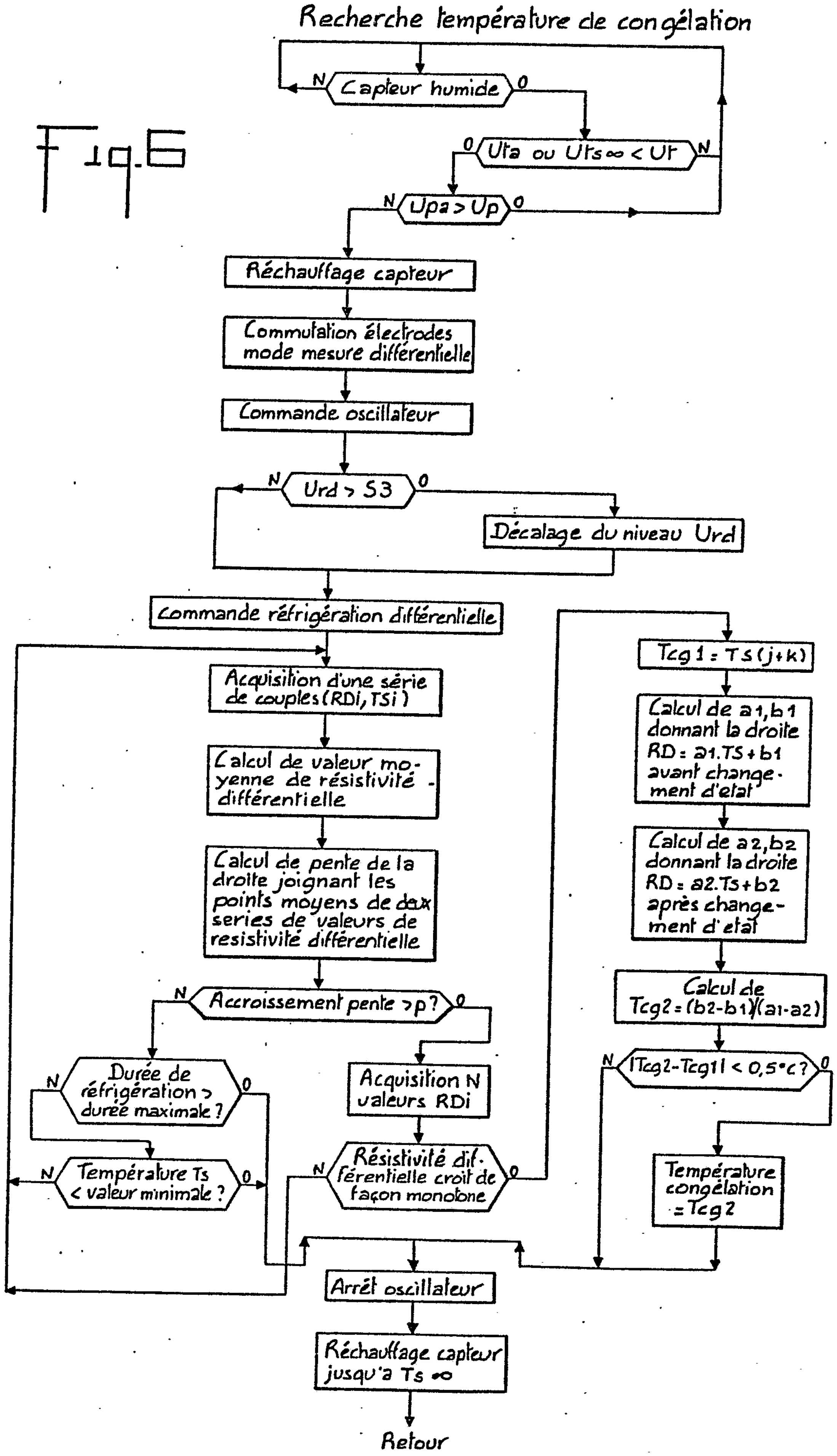
Recherche température de congélation
Capteur humide
N
0
Uta ou Uts∞ < Ut
0
N
Upa > Up
N
0
Réchauffage capteur
Commutation électrodes mode mesure différentielle
Commande oscillateur
Urd > S3
N
0
Décalage du niveau Urd
Commande réfrigération différentielle
Acquisition d'une série de couples (RDi, TSi)
Calcul de valeur moyenne de résistivité différentielle
Calcul de pente de la droite joignant les points moyens de deux series de valeurs de resistivité différentielle
Accroissement pente > p ?
N
0
Durée de réfrigération > durée maximale ?
N
0
Température Ts < valeur minimale ?
N
0
Acquisition N valeurs RDi
Résistivité différentielle croît de façon monotone
N
0
Tcg1 = TS(j+k)
Calcul de a1, b1 donnant la droite RD = a1.TS + b1 avant changement d'etat
Calcul de a2, b2 donnant la droite RD = a2.TS + b2 après changement d'etat
Calcul de Tcg2 = (b2-b1)/(a1-a2)
|Tcg2-Tcg1| < 0,5°c ?
N
0
Température congélation = Tcg2
Arrêt oscillateur
Réchauffage capteur jusqu'a Ts ∞
Retour

Office européen des brevets

# RAPPORT DE RECHERCHE EUROPEENNE

0248691

Numéro de la demande

EP 87 40 1040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 560 941 (FIRMA MARCEL BOSCHUNG)<br>* Colonne 2, ligne 3 - colonne 3, ligne 57; colonne 6, ligne 65 - colonne 7, ligne 10 *<br>--- | 1,2,5 | G 01 N 27/04<br>G 08 B 19/02 |
| A | GB-A-2 067 292 (FINDLAY, IRVINE LTD)<br>* En entier *<br>--- | 1,3,4 | |
| D,A | FR-A-2 389 952 (FIRMA MARCEL BOSCHUNG)<br>* Page 5, ligne 11 - page 6, ligne 31; revendications 1-9 *<br>----- | | |
| | | | **DOMAINES TECHNIQUES RECHERCHES (Int. Cl.4)** |
| | | | G 01 N 27/00<br>G 01 N 25/00<br>G 08 B 19/00 |

Le présent rapport de recherche a été établi pour toutes les revendications

| Lieu de la recherche | Date d'achèvement de la recherche | Examinateur |
|---|---|---|
| LA HAYE | 02-09-1987 | BINDON C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03.82